# EUROPEAN PATENT APPLICATION

(11) **EP 4 503 244 A1**
(43) Date of publication of application: **05.02.2025**
(21) Application number: 23780879.5
(22) Date of filing: 30.03.2023
(51) Int. Cl.: H01M 10/0587, H01M 4/13, H01M 4/134, H01M 4/40, H01M 4/64, H01M 4/66, H01M 10/052, H01M 50/44, H01M 50/446, H01M 50/449, H01M 50/451, H01M 50/463

(54) **SECONDARY BATTERY**

(30) Priority: 31.03.2022 JP 2022060745
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP)
(74) Representative: Novagraaf International SA
(86) International application number: PCT/JP2023/013184
(87) International publication number: WO 2023/190871

(57) **Abstract**

A secondary battery includes: a wound electrode group including a pair of electrodes and a separator disposed between the pair of electrodes; a core member disposed in a hollow part of the electrode group; and a non-aqueous electrolyte. At least one of the pair of electrodes includes an active material layer and a resin film supporting the active material layer.

## Description

### [Technical Field]

The present disclosure relates to a secondary battery including a non-aqueous electrolyte.

### [Background Art]

A secondary battery includes a wound electrode group and a non-aqueous electrolyte. The wound electrode group is obtained by spirally winding a positive electrode and a negative electrode with a separator disposed between the positive electrode and the negative electrode. Examples of a non-aqueous electrolyte secondary battery include a lithium ion secondary battery and a lithium secondary battery (lithium metal secondary battery). The negative electrode of a lithium ion secondary battery contains a negative electrode active material that absorbs lithium ions when the battery is charged and releases the lithium ions when the battery is discharged. Examples of such a negative electrode active material include graphite and silicon-containing materials. In a lithium secondary battery, lithium metal is deposited on the negative electrode when the battery is charged, and the lithium metal dissolves and is released as lithium ions into the non-aqueous electrolyte when the battery is discharged.

PTL 1 proposes a cylindrical lithium ion battery obtained by winding a positive electrode plate and a negative electrode plate around a core with a separator disposed between the positive electrode plate and the negative electrode plate to form a wound group, and housing the wound group in a cylindrical battery case, wherein the wound group includes two sets of two separators disposed between the positive electrode plate and the negative electrode plate, leading end portions of the two separators are joined through plastic welding, and the joined leading end portions of the two sets of separators are joined to different positions on the core.

### [Citation List]

### [Patent Literature]

PTL 1: Japanese Laid-Open Patent Publication No. 2001-229970

### [Summary of Invention]

### [Technical Problem]

There is demand for secondary batteries having improved cycle characteristics. When the core described in PTL 1 is disposed in a hollow part of a wound electrode group, it is possible to suppress buckling of electrodes, breakage of the electrodes, and the like due to deformation of the electrodes in the vicinity of the hollow part of the electrode group during charging and discharging. However, the cycle characteristics are still insufficient.

### [Solution to Problem]

An aspect of the present disclosure relates to a secondary battery including: a wound electrode group including a pair of electrodes and a separator disposed between the pair of electrodes; a core member disposed in a hollow part of the electrode group; and a non-aqueous electrolyte, wherein at least one of the pair of electrodes includes an active material layer and a resin film supporting the active material layer.

### [Advantageous Effects of Invention]

According to the present disclosure, it is possible to improve the cycle characteristics of a secondary battery.

While novel features of the present invention are set forth in the appended claims, both the configuration and content of the present invention, as well as other objects and features of the present invention, will be better understood from the following detailed description given with reference to the drawings.

### [Brief Description of Drawings]

FIG. 1 is a schematic longitudinal cross-sectional view of a secondary battery according to an embodiment of the present disclosure.
FIG. 2 is a schematic diagram showing an example of a configuration of an electrode group.
FIG. 3 is a schematic diagram showing another example of the configuration of the electrode group.
FIG. 4(a) is a top view showing an example of a first substrate and a negative electrode placed on the first substrate. FIG. 4(b) is a top view showing an example of a negative electrode composite body.
FIG. 5(a) is a top view showing an example of a second substrate and a positive electrode placed on the second substrate. FIG. 5(b) is a top view showing an example of a positive electrode composite body.
FIG. 6 is a top view showing an example of a positive and negative electrode stack.
FIG. 7(a) is a top view showing an example of a first substrate including protrusions and a negative electrode placed on the first substrate. FIG. 7(b) is a top view showing another example of the negative electrode composite body.
FIG. 8 is a top view showing another example of the positive and negative electrode stack.
FIG. 9 is a top view showing an example of a positive electrode including protrusions.
FIG. 10 is a top view showing another example of the positive and negative electrode stack.
FIG. 11 is a schematic diagram showing an example of an electrode.

### [Description of Embodiments]

The following describes example embodiments of the present disclosure, but the present disclosure is not limited to the following examples. In the following description, specific numerical values and materials may be described as examples, but other numerical values and materials may also be applied as long as effects of the present disclosure can be obtained. In the present specification, the expression "a numerical value A to a numerical value B" includes the numerical value A and the numerical value B, and can be read as "the numerical value A or more and the numerical value B or less". In the following description, if lower and upper limits of numerical values regarding specific physical properties or conditions are exemplified, any of the exemplified lower limits and any of the exemplified upper limits can be combined as desired as long as the lower limit is not equal to or greater than the upper limit. When a plurality of materials are described as examples, a material selected from the materials may be used alone, or two or more of the materials may be used in combination.

A secondary battery according to an embodiment of the present disclosure includes a wound electrode group and a non-aqueous electrolyte. The wound electrode group includes a pair of electrodes and a separator disposed between the pair of electrodes. A core member is disposed in a hollow part of the electrode group. At least one of the pair of electrodes includes an active material layer and a resin film supporting the active material layer. In the following description, the wound electrode group including the core member disposed in the hollow part may also be referred to as the "electrode group including the core member". The electrode including the active material layer supported by the resin film may also be referred to as the "electrode including the resin film". The active material layer may be supported on one surface of the resin film or on both surfaces of the resin film.

In a conventional secondary battery including a wound electrode group that has a hollow part, electrodes deform in the vicinity of the hollow part of the electrode group during charging and discharging, leading to buckling or breakage of the electrodes, for example, and deterioration of the cycle characteristics. Particularly, in a lithium secondary battery, lithium metal is deposited on the negative electrode when the battery is charged, the volume of the negative electrode significantly changes during charging and discharging, a large stress tends to be generated, and breakage or the like tends to occur. When an electrodeposited copper foil or the like is used as a negative electrode current collector of the lithium secondary battery, the negative electrode breaks due to embrittlement of the negative electrode current collector during charging and discharging.

However, in the secondary battery according to the present disclosure, the core member is disposed in the hollow part of the electrode group, and therefore, deformation of the electrodes in the vicinity of the hollow part of the electrode group is suppressed, and breakage or the like of the electrodes is suppressed. Moreover, the active material layer is supported by the flexible resin film, and therefore, stress generated in the electrodes during charging and discharging is mitigated, and breakage or the like of the electrodes is suppressed.

When the core member is disposed in the hollow part of the electrode group and the resin film is used as a support for the active material layer, the cycle characteristics are improved significantly.

When the secondary battery is a lithium secondary battery in which lithium metal is deposited on the negative electrode when the battery is charged, breakage of the negative electrode due to the deposition of lithium metal and embrittlement of a negative electrode current collector is suppressed because the resin film is used, and the shape of the electrode group is significantly stabilized because the core member is disposed. Therefore, a surface pressure is stably applied to the entire electrode group when lithium metal is deposited on the negative electrode, and the generation of dendrites of the lithium metal is suppressed. Isolation of the lithium metal due to the generation of dendrites and an increase in a negative electrode resistance are suppressed, for example.

Even when the secondary battery is a lithium ion secondary battery in which a silicon-containing material or graphite is used as a negative electrode active material, breakage of the electrode due to expansion and contraction of the active material is suppressed because the resin film is used, and the shape of the electrode group is significantly stabilized because the core member is disposed. Therefore, a surface pressure is stably applied to the entire electrode group during charging and discharging, and isolation of the active material due to expansion and contraction is suppressed.

Furthermore, the resin film elastically deforms in the electrode group during charging and discharging, and therefore, the effect of a surface pressure being applied to the entire electrode group tends to be obtained continuously and stably during charge-discharge cycles.

For the reasons described above, a capacity retention rate during the cycles increases significantly.

The electrode group is usually in contact with an inner surface of a battery can during charging and discharging. An outer circumferential surface side and an inner circumferential surface side of the electrode group are fixed by the battery can and the core member, and therefore, the shape of the electrode group is further stabilized, and a surface pressure is likely to be more stably applied to the entire electrode group.

The pair of electrodes are a positive electrode and a negative electrode. It is sufficient that at least one of the positive electrode and the negative electrode is an electrode including a resin film. It is preferable that both the positive electrode and the negative electrode are electrodes including resin films.

Each of the pair of electrodes and the separator has an elongated sheet shape, for example. The electrode group including the core member can be manufactured by winding the pair of electrodes around the core member with the separator disposed between the pair of electrodes, for example. The electrodes may be wound after the electrodes are placed on a substrate (or a substrate including protrusions) that constitutes the separator and fixed to the substrate, or after protrusions are provided on the electrodes, for example.

For example, it is preferable to dispose the core member at a predetermined position on a stack (a positive and negative electrode stack, which will be described later) including the pair of electrodes and the separator, fix the core member at the position, and then wind the stack. There is no particular limitation on the method for fixing the core member, and it is possible to fix the core member with a piece of tape or an adhesive, or through heat welding or ultrasonic welding, for example. In this case, the core member is fixed to an end portion of the electrode group from which the electrode group is wound, and the core member is fixedly disposed in the hollow part of the electrode group. In this case, the shape of the electrode group as a whole is further stabilized, and buckling and bending of the electrodes in the vicinity of the hollow part of the electrode group are remarkably suppressed. Also, a surface pressure is likely to be uniformly applied to the entire electrode group, the effect of suppressing the generation of dendrites of lithium metal is stably obtained, and the cycle characteristics are further improved.

Alternatively, the electrode group including the core member may be manufactured by winding the positive electrode and the negative electrode around a predetermined winding core with the separator disposed between the positive electrode and the negative electrode, removing the winding core to obtain an electrode group including a hollow part, and then inserting the core member into the hollow part of the electrode group. In this case, the core member is not fixed to the end portion of the electrode group from which the electrode group is wound, but the effect of stabilizing the shape of the electrode group can be obtained by disposing the core member.

### (Resin Film)

The resin film has sufficient flexibility and can mitigate stress generated in the electrode during charging. The stress is generated due to expansion of an active material that absorbs lithium ions and/or deposition of lithium metal during charging. Also, stress that is generated in the electrode when the electrode is wound can be mitigated. Accordingly, breakage or the like of the electrode can be suppressed. Moreover, the resin film has a small weight, and an energy density of the secondary battery can be increased easily with use of the resin film. Furthermore, the resin film is unlikely to break when conveyed by a roller, and is easy to handle.

In the lithium secondary battery, lithium metal is deposited on the negative electrode when the battery is charged, and accordingly, expansion of the negative electrode tends to be large. The "expansion of the negative electrode" referred to here means an increase in the sum of the volume of the negative electrode and the volume of the deposited lithium metal. Particularly when the lithium metal is deposited in such a manner as to form dendrites, the amount of expansion becomes larger. Consequently, stress tends to be generated in the negative electrode (the electrode group including the negative electrode). Therefore, a remarkable effect of mitigating the stress with use of the resin film can be obtained in the lithium secondary battery.

The resin film contains a resin or an organic substance as a main component, and the resin or the organic substance accounts for 51% by mass or more of the resin film. The resin film may also contain an inorganic substance such as inorganic particles. The resin film may include a thin layer containing the inorganic substance on at least one surface thereof. The resin film may be a stretched film, a non-porous film (film including no pores), or a film that includes a plurality of regularly arranged pores. The pores may be formed by causing particles such as sand particles to collide with the resin film. The resin film may have insulating properties, conductive properties, or non-conductive properties. There is no particular limitation on the shape and physical properties of the resin film.

The resin contained in the resin film is not particularly limited, and examples thereof include a polyester resin, an olefin resin, a polyphenylene sulfide resin, an acrylic resin, a polycarbonate resin, a polyether ether ketone resin, a polyether sulfone resin, a polyamide resin, a polyimide resin, a nylon resin, a polyvinylidene chloride resin, an ethylene-vinyl alcohol copolymer, a polyvinyl alcohol resin, a polystyrene resin, a urethane resin, and an epoxy resin. A resin may be used alone, or two or more resins may be used in combination as the resin contained in the resin film. The resin contained in the resin film may have an aromatic ring, a resin that does not include a fluorine atom, or an olefin resin. When the resin has an aromatic ring (e.g., a benzene ring) in its molecule, affinity between the resin film and a lithium metal layer increases, and bonding force between the resin film and the lithium metal layer increases.

Preferred polyester resins are aromatic polyesters such as polyethylene terephthalate, polybutylene terephthalate, and polyethylene naphthalate. The film containing polyethylene terephthalate or the like may be a non-stretched film or a biaxially stretched film. Examples of the acrylic resin include polymethyl methacrylate. Preferred polyimide resins are aromatic polyimides. Preferred polyamide resins are aromatic polyamides (aramid resins).

Preferred examples of the olefin resin include polypropylene and polyethylene. Examples of the polypropylene include non-stretched polypropylene and biaxially stretched polypropylene. Examples of the polyethylene include low-density polyethylene, medium-density polyethylene, high-density polyethylene, linear low-density polyethylene, and metallocene polyethylene. Examples of the olefin resin include, in addition to those listed above, an ethylene-vinyl acetate copolymer, an ethylene-methyl acrylate copolymer, an ethylene-ethyl acrylate copolymer, an ethylene-methyl methacrylate copolymer, an ethylene-acrylic acid copolymer, an ethylene-methacrylic acid copolymer, and an ionomer resin (e.g., including at least one of an ethylene-acrylic acid copolymer and an ethylene-methacrylic acid copolymer).

Examples of a method for manufacturing the resin film include extrusion molding such as a T-die method and an inflation method. The film may be a non-stretched film or a stretched film. The stretched film may be a uniaxially stretched film or a biaxially stretched film obtained through sequential (or simultaneous) stretching. There is no particular limitation on the number of monomers constituting the resin (polymer). The polymer may be a homopolymer, a copolymer, or a terpolymer. There is no particular limitation on the arrangement of monomers, and the polymer may be a random copolymer or a block copolymer. The resin film may be constituted by two or more types of resin films stacked on each other. The resin may be in a crystal state, an amorphous state obtained through a rapid cooling method or the like, or in a mixed state of the crystal state and the amorphous state. In order to improve adhesion, corona treatment or plasma treatment may be performed on a surface of the resin film.

From the standpoint of increasing the energy density of the lithium secondary battery, the thinner the resin film is, the better, as long as mechanical strength of the resin film is secured. The thickness of the resin film may be 5 µm or more and 80 µm or less, or 5 µm or more and 30 µm or less, for example.

### (Metal Base Layer)

The resin film is usually an insulator and does not have a current collecting function. In order to make the electrode have the current collecting function, a surface of the resin film may be covered with a metal base layer. Hereinafter, the resin film whose surface is covered with the metal base layer will also be referred to as the "resin film including the metal base layer". It is sufficient that the metal base layer covers a region supporting the active material layer (e.g., at least 90% of the region) and a region to which an electrode lead is attached on the surface of the resin film, for example.

When the electrode is the negative electrode, it is preferable that the metal base layer contains copper, nickel, chromium, stainless steel, titanium, silver, gold, tin, or the like, for example. When the electrode is the positive electrode, it is preferable that the metal base layer contains aluminum, stainless steel, or the like, for example. In this case, the metal base layer is likely to have corrosion resistance and electrical conductivity, for example, and is unlikely to form an alloy with lithium.

From the standpoint of increasing the energy density of the battery, the thickness of the metal base layer may be 2 µm or less, or 1 µm or less, for example. From the standpoint of securing current collecting properties and adhesion, the thickness of the metal base layer may be 0.001 µm or more, for example.

When the electrode is the negative electrode of a lithium secondary battery, the electrode may include a lithium metal layer that has the current collecting function. That is to say, the negative electrode may include a lithium metal layer on the resin film. In this case, the metal base layer may be provided in a portion of the surface of the resin film to which a negative electrode lead is connected.

Alternatively, the lithium metal layer may be provided in intimate contact with the resin film including the metal base layer. When the metal base layer is provided, even if the lithium metal is isolated like islands due to a localized reduction of the lithium metal layer or conversion of the lithium metal to a lithium compound during charge-discharge cycles, it is possible to suppress deterioration of the current collecting function.

The metal base layer can be formed through a vapor growth method such as vapor deposition or sputtering, an electroless plating method, an electroplating method, or a lamination method, and there is no particular limitation on the method for forming the metal base layer.

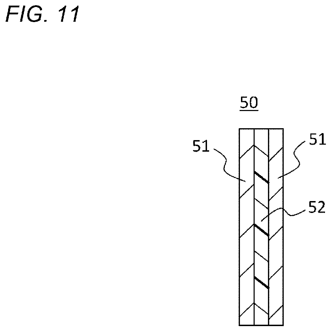

FIG. 11 is a cross-sectional view schematically showing an example of an electrode including a resin film.

An electrode 50 includes active material layers 51 and a resin film 52. The active material layers 51 are supported on both surfaces of the resin film 52. The both surfaces of the resin film 52 may be covered with metal base layers. The metal base layers may be provided between the resin film 52 and the active material layers 51. The active material layers 51 are lithium metal layers, for example.

### (Core Member)

When the battery is charged and discharged, a considerably large pressure is repeatedly applied to the core member inserted into the hollow part of the electrode group. Therefore, the core member needs to be made of a material that has sufficiently high mechanical strength and durability. The material of the core member may be a metal material. In particular, it is desirable that the core member is made of stainless steel or nickel plated carbon steel from the standpoint of the strength and durability. Alternatively, the core member may be made of a resin material such as a polyester resin (e.g., polyethylene terephthalate, polyethylene naphthalate, polybutylene terephthalate), an olefin resin (e.g., polyethylene, polypropylene), a polyphenylene sulfide resin, an acrylic resin (e.g., polymethyl methacrylate), a polycarbonate resin, a polyether ether ketone resin, a polyether sulfone resin, a polyamide resin (e.g., aramid resin), or a polyimide resin. A resin material may be used alone, or two or more resin materials may be used in combination as the material of the core member. In particular, it is desirable that the core member is made of polypropylene, polyethylene, or polyethylene terephthalate from the standpoint of resistance to the electrolyte solution, for example.

The shape of the core member can be selected according to the shape of the hollow part of the electrode group. The core member may have a round columnar shape, and preferably has a cylindrical shape. A cylindrical core member can expand and contract appropriately and function like a spring. Also, the non-aqueous electrolyte can be stored in a hollow part of the cylindrical core member, and therefore, the ability of the electrode group to retain the non-aqueous electrolyte can be improved. The thickness of the material of the core member in a radial direction may be 0.1 mm or more and 2 mm or less, for example.

An outer diameter D1 of the core member may be set such that the core member comes into contact with the inner circumferential surface of the electrode group when the battery is initially discharged (e.g., when the battery is discharged for the first time after the battery is purchased or when the battery is discharged after being subjected to a few charge-discharge cycles after the production), for example. In this case, an appropriate pressure is constantly applied from the core member to the electrode group from the inner circumferential surface side from when the battery is charged to when the battery is discharged, and accordingly, deformation of the electrodes is suppressed.

Note that the expression "when the battery is discharged" refers to a state where the amount of lithium metal deposited on the negative electrode is small (or the amount of lithium ions absorbed by the negative electrode is small), such as a state where the state of charge (SOC) is 0.1×C or less, where C represents the rated capacity of the battery, for example.

From the standpoint of improving the cycle characteristics, it is preferable that the outer diameter D1 of the core member and an outer diameter D2 of the electrode group when the battery is discharged satisfy a relationship: D1/D2≤1/4. When D1/D2 is 1/4 or less, it is possible to make a portion that does not contribute to charge-discharge reactions small. Moreover, in this case, the pressure applied from the core member toward the inner circumferential surface of the electrode group and a pressure applied from the battery can toward the outer circumferential surface of the electrode group are likely to be appropriate, and the ability to retain the non-aqueous electrolyte inside the electrode group is likely to be secured during charging and discharging.

Note that an inner diameter of the battery can may be set such that the outer circumferential surface of the electrode group and the inner circumferential surface of the battery can come into contact with each other when the battery is initially discharged (e.g., when the battery is discharged for the first time after the battery is purchased or when the battery is discharged after being subjected to a few charge-discharge cycles after the production). In this case, an appropriate pressure is constantly applied from the battery can to the electrode group from the outer circumferential surface side from when the battery is charged to when the battery is discharged, and accordingly, deformation of the electrodes is suppressed. In this case, the outer diameter D2 of the electrode group is substantially the same as the inner diameter of the battery can.

### (Lithium Secondary Battery)

The secondary battery according to the present disclosure may be a lithium secondary battery (lithium metal secondary battery). The following describes the lithium secondary battery in detail.

### (Negative Electrode)

Lithium metal is deposited on the negative electrode of the lithium secondary battery when the battery is charged, and the lithium metal dissolves when the battery is discharged.

In the lithium secondary battery, for example, 70% or more of the rated capacity is realized by deposition and dissolution of lithium metal. Movement of electrons at the negative electrode during charging and discharging occurs mainly due to deposition of lithium metal on the negative electrode and dissolution of lithium metal from the negative electrode. Specifically, 70% to 100% (e.g., 80% to 100% or 90% to 100%) of the movement of electrons (from another standpoint, a current) at the negative electrode during charging and discharging occurs due to deposition and dissolution of lithium metal. That is to say, the negative electrode of the lithium secondary battery differs from a negative electrode (negative electrode of a lithium ion secondary battery) at which movement of electrons during charging and discharging occurs mainly due to lithium ions being absorbed and released by a negative electrode active material (e.g., graphite).

In a battery in which lithium metal is deposited on the negative electrode when the battery is charged, the open circuit potential (OCV: Open Circuit Voltage) of the negative electrode in a fully-charged state is 70 mV or less with respect to lithium metal (lithium dissolution/deposition potential), for example. The fully-charged state is a state where the battery has been charged such that the SOC (State of Charge) is 0.98×C or more, where C represents the rated capacity of the battery, for example. The open circuit potential (OCV) of the negative electrode in the fully-charged state can be measured by disassembling the fully-charged battery in an argon atmosphere, taking out the negative electrode, and assembling a cell using lithium metal as a counter electrode. A non-aqueous electrolyte used in the cell may have the same composition as the non-aqueous electrolyte included in the disassembled battery.

The negative electrode of the lithium secondary battery may include a lithium metal layer as an active material layer and a resin film supporting the lithium metal layer. The negative electrode may also include a metal base layer covering a surface of the resin film, and the metal base layer may be provided between the lithium metal layer and the resin film.

The lithium metal layer functions as a negative electrode current collector. Lithium ions contained in the non-aqueous electrolyte receive electrons on the lithium metal layer during charging and become lithium metal, which is deposited on the surface of the lithium metal layer. The lithium metal deposited on the surface of the lithium metal layer dissolves as lithium ions in the non-aqueous electrolyte during discharging. Note that the lithium ions contained in the non-aqueous electrolyte may either be derived from a lithium salt added to the non-aqueous electrolyte or supplied from a positive electrode active material during charging, or both.

It is sufficient that the lithium metal layer is formed of at least one of lithium metal and a lithium alloy. The lithium alloy may contain elements such as aluminum, magnesium, indium, zinc, copper, and silver in addition to lithium.

The thickness of the lithium metal layer is only required to be large enough to secure sufficient current collecting properties during discharging, and may be 1 µm or more, or 5 µm or more in a discharged state where the depth of discharge (DOD) is 90% or more, for example. On the other hand, from the standpoint of increasing the energy density of the lithium secondary battery, the thickness of the lithium metal layer may be 40 µm or less, or 30 µm or less in the discharged state where the depth of discharge is 90% or more. Note that the discharged state where the depth of discharge (DOD) is 90% or more is the same as a state where the state of charge (SOC) is 0.1×C or less, where C represents the rated capacity of the battery.

It is preferable that a thickness X of lithium metal deposited on the negative electrode when the battery is charged and a distance Y (hereinafter also referred to as an "inter-electrode distance Y") between the positive electrode and the negative electrode when the battery is discharged satisfy a relationship: Y/X>1.5. Note that the expression "when the battery is charged" as used here refers to a state where the amount of lithium metal deposited on the negative electrode is large, such as a state where the SOC is 0.9×C or more, for example. The expression "when the battery is discharged" refers to a state where the amount of lithium metal deposited on the negative electrode is small, such as a state where the SOC is 0.1×C or less, for example.

The thickness X described above is a difference between the thickness of the lithium metal layer when the amount of deposited lithium metal is large and the battery is charged and the thickness of the lithium metal layer when the amount of deposited lithium metal is small and the battery is discharged. The inter-electrode distance Y can also be said to be the thickness of the separator between the positive electrode and the negative electrode when the battery is discharged. When the separator includes a plurality of substrates (or a substrate and protrusions), the thickness of the separator is a total thickness of the plurality of substrates (or the substrate and the protrusions).

When Y/X>1.5 is satisfied, an appropriate inter-electrode distance is secured, and the separator is appropriately pressed and compressed (e.g., voids in the separator become smaller in size) by Li deposited during charging, and therefore, stress generated by the deposited Li is likely to be mitigated. When Y/X>1.5 is satisfied, stress generated in the electrode during charging and discharging is effectively mitigated by the resin film and the separator, and the effect of an appropriate surface pressure being applied to the entire electrode group during charge-discharge cycles is likely to be obtained continuously and stably. Accordingly, a remarkable effect of suppressing the generation of dendrites and a remarkable effect of improving the cycle characteristics can be obtained, for example.

When the positive electrode is an electrode including a resin film, a negative electrode current collector may also be used instead of the resin film (the resin film including the metal base layer) in the negative electrode. Examples of the material of the negative electrode current collector include copper, a copper alloy, oxygen-free copper, and stainless steel.

### (positive Electrode)

The positive electrode includes a positive electrode active material layer that contains a positive electrode active material that absorbs and releases lithium ions, for example. The positive electrode may also include a resin film including a metal base layer and supporting the positive electrode active material layer. That is to say, the positive electrode may include a resin film supporting the positive electrode active material layer and a metal base layer covering a surface of the resin film, and the metal base layer may be provided between the positive electrode active material layer and the resin film. Hereinafter, the positive electrode active material layer may also be referred to as a "positive electrode mixture layer".

The positive electrode mixture layer contains the positive electrode active material and components other than the positive electrode active material as necessary. The components other than the positive electrode active material may include a binder, an electrically conductive material, and the like. Known materials may be used as the positive electrode active material, the binder, the electrically conductive material, and the like. The positive electrode can be obtained by applying a positive electrode mixture slurry to a surface of a resin film including a metal base layer, drying the applied film, and then rolling the dry applied film to form the positive electrode mixture layer, for example. The positive electrode mixture layer may be formed on one surface or both surfaces of the resin film including the metal base layer.

Examples of the positive electrode active material include a lithium-containing transition metal oxide, a transition metal fluoride, a polyanion, a fluorinated polyanion, and a transition metal sulfide. In particular, a lithium-containing transition metal oxide is preferred in terms of its low production cost and high average discharge voltage.

The lithium-containing transition metal oxide is a composite oxide containing lithium and a metal Me other than lithium, and the metal Me includes at least a transition metal. Among lithium-containing transition metal oxides, a composite oxide that has a crystal structure like that of rock-salt (layered rock-salt) having a layered structure is preferred in view of achieving a high capacity.

The metal Me may include Sc, Ti, V, Cr, Mn, Fe, Co, Ni, Cu, Y, Zr, W, etc., as a transition metal element. The lithium-containing transition metal oxide may contain one transition metal element or two or more transition metal elements. It is desirable that the metal Me includes at least one selected from the group consisting of Co, Ni, and Mn as the transition metal element, and it is desirable that the metal Me includes at least Ni as the transition metal element.

The lithium-containing transition metal oxide may contain one or more typical elements as necessary. Examples of the typical elements include Mg, Al, Ca, Zn, Ga, Ge, Sn, Sb, Pb, and Bi, etc. The typical element may be Al, for example. That is to say, the metal Me may include Al as an optional component.

The lithium-containing transition metal oxide is represented by a general formula (1): LiₐNi_{b}M_{1-b}O₂, for example. In the general formula (1), a and b satisfy 0.9≤a≤1.2 and 0.65≤b≤1, and M is at least one element selected from the group consisting of Co, Mn, Al, Ti, Fe, Nb, B, Mg, Ca, Sr, Zr, and W.

A molar ratio: mLi/mMe of a total amount mLi of Li contained in the positive electrode and the negative electrode to an amount mMe of the metal Me contained in the lithium-containing transition metal oxide is 1.2 or less, for example, and may be 1.1 or less.

When the negative electrode is an electrode including a resin film, a positive electrode current collector may also be used instead of the resin film including the metal base layer in the positive electrode. Examples of the material of the positive electrode current collector include stainless steel, aluminum, an aluminum alloy, and titanium, etc.

### (Separator)

A porous substrate that has ion permeability and electrically insulating properties is used as the separator. The separator may be constituted by a substrate or include a plurality of substrates. It is sufficient that each substrate has a sheet shape. The separator may be a stack of a plurality of substrates. Alternatively, the separator may be a stack of a substrate and protrusions (spacer). A space may be formed between an electrode and the substrate by the protrusions (spacer). The protrusions may be formed along a plurality of lines extending in a longitudinal direction of the separator, may be formed in a honeycomb pattern, or may be distributed like dots, for example.

Examples of the substrate include a microporous film, a woven fabric, a nonwoven fabric, and a heat-resistant layer. The microporous film is made of a resin material such as an olefin resin, a polyamide resin, a polyimide resin, a polyester resin, or a cellulose resin. Examples of the olefin resin include polyethylene, polypropylene, and an ethylene-propylene copolymer. Examples of the polyester resin include polyethylene terephthalate. Examples of a fiber material of the nonwoven fabric include glass fiber, cellulose fiber, an olefin resin, a polyamide resin, a polyimide resin, and a polyester resin, etc. The heat-resistant layer is a layer made of a mixture of an inorganic material (e.g., an aluminum oxide or an aluminum hydroxide) and a resin material, for example.

The thickness of the separator is not particularly limited, and is 10 µm or more and 80 µm or less, for example, and may be 20 µm or more and 70 µm or less. When the separator is a stack of a plurality of substrates, the thickness of the separator is a total thickness of the stack.

The separator may include at least one substrate selected from the group consisting of a microporous sheet (sheet-shaped microporous film) and a nonwoven sheet. Alternatively, the separator may include a microporous sheet and a heat-resistant layer provided on at least one surface of the microporous sheet. The heat-resistant layer may be disposed between the microporous sheet and at least one of the positive electrode and the negative electrode in the electrode group. The heat-resistant layer may be provided so as to cover the entire area of the at least one surface of the microporous sheet or may be provided along lines on the at least one surface of the microporous sheet. A space may be provided between the microporous sheet and at least one of the positive electrode and the negative electrode by the heat-resistant layer provided along lines.

The heat-resistant layer contains inorganic particles and a resin material supporting the inorganic particles, for example. Examples of the resin material include a fluorine-containing resin such as polyvinylidene fluoride (PVdF) and polytetrafluoroethylene and fluorine-containing rubber such as a vinylidene fluoride-tetrafluoroethylene copolymer. Examples of the inorganic particles include particles of a metal oxide having insulating properties. Examples of the metal oxide include aluminum oxide (alumina or boehmite), magnesium oxide, titanium oxide (titania), zirconium oxide, silicon oxide (silica), magnesium hydroxide, and aluminum hydroxide, etc.

The average particle diameter of the inorganic particles is not particularly limited, but is preferably 10 µm or less, for example, and more preferably 0.1 µm or more and 2.0 µm or less. The particle diameter of an inorganic particle is determined by capturing an image of a cross section of the separator with use of an electron microscope, identifying the particle by performing image processing such as binarization, and calculating the diameter of an equivalent circle that has the same area as the particle. The average particle diameter is obtained by determining particle diameters of 100 or more particles and calculating the average of the particle diameters, for example.

The heat-resistant layer may be formed by applying a treatment liquid containing the resin material and the inorganic particles to a surface of the substrate, the positive electrode, or the negative electrode, and drying the applied liquid, for example. For example, N-methyl-2-pyrrolidone (NMP) is used as a solvent or a dispersion medium of the treatment liquid. The content of inorganic particles in the heat-resistant layer (treatment liquid) is 70 parts by mass or more and 100 parts by mass or less per 100 parts by mass of the resin material, for example. In this case, the strength and heat resistance of the heat-resistant layer are likely to be secured.

The separator may include a substrate and protrusions (spacer). In this case, the spacer is disposed between the substrate and at least one of the positive electrode and the negative electrode. Accordingly, a space is formed between the substrate and at least one of the positive electrode and the negative electrode. The formed space absorbs an increase in the volume due to deposition of lithium metal on the negative electrode, and mitigates stress generated in the negative electrode. Also, the non-aqueous electrolyte is stored in the space, and accordingly, dry-up is suppressed and the non-uniformity of a reaction occurring in the electrode group is suppressed. The protrusions may contain a resin material, or contain a resin material and inorganic particles, for example. The examples of the resin material and the inorganic particles listed above for the heat-resistant layer may also be used as the resin material and the inorganic particles contained in the protrusions.

It is sufficient that the space is present at least in a discharged state. The discharged state referred to here is a state after a large amount of lithium metal has dissolved from the negative electrode, such as a state where the SOC is 0.1×C or less, for example. However, the space need not be completely filled with lithium metal in a charged state, and may be present in the fully-charged state, for example.

The spacer is disposed on at least one selected from the group consisting of a surface of the positive electrode, a surface of the negative electrode, and a surface of the substrate. It is preferable that the spacer is disposed on a surface of the positive electrode or the positive-electrode-side surface of the substrate. In this case, a surface pressure is likely to be applied from the substrate to the negative electrode, dendritic deposition of lithium metal is suppressed, and this is advantageous in increasing the capacity retention rate in charge-discharge cycles.

The height of the spacer may be designed as appropriate according to the thickness of the sheet-shaped substrate and a distance between electrode plates. When the separator includes the spacer, the negative electrode includes a first region that faces the spacer and a second region that does not face the spacer. The space between electrode plates is formed in the second region.

The percentage of the area of the first region to the total area of the first region and the second region is not particularly limited, and may be 5% or more and 30% or less, or 5% or more and 20% or less, for example, in view of a balance between the cycle characteristics and an internal resistance.

### (Non-Aqueous Electrolyte)

The non-aqueous electrolyte has ion conductivity (e.g., lithium ion conductivity). A non-aqueous electrolyte having lithium ion conductivity contains a non-aqueous solvent, and lithium ions and anions dissolved in the non-aqueous solvent, for example. The non-aqueous electrolyte may be a liquid or a gel. A liquid non-aqueous electrolyte is prepared by dissolving a lithium salt in a non-aqueous solvent, for example. When the lithium salt dissolves in the non-aqueous solvent, lithium ions and anions are produced.

The lithium salt or anions may be any known lithium salt or anions that are used for non-aqueous electrolytes of lithium secondary batteries. Specific examples thereof include BF₄⁻, ClO₄⁻, PF₆⁻, CF₃SO₃⁻, CF₃CO₂⁻, imide anions, and oxalate complex anions, etc. Examples of the imide anions include N(SO₂CF₃)₂⁻ and N(CₘF₂ₘ₊₁SO₂)ₓ(CₙF₂ₙ₊₁SO₂)_{y}⁻ (m and n are independently 0 or an integer of 1 or more, x and y are independently 0, 1, or 2, and satisfy x+y=2), etc. The oxalate complex anions may contain boron and/or phosphorus. The non-aqueous electrolyte may contain one of these anions, or two or more of them.

From the standpoint of suppressing dendritic deposition of lithium metal, the non-aqueous electrolyte preferably contains at least oxalate complex anions, in particular, oxalate complex anions containing fluorine. The oxalate complex anions containing fluorine interact with lithium to make lithium metal more likely to be deposited uniformly in a fine particulate state. Therefore, localized deposition of lithium metal is likely to be suppressed. The oxalate complex anions containing fluorine may be used in combination with other anions. The other anions may be PF₆⁻ and/or imide anions. Examples of the oxalate complex anions include bis(oxalato)borate anions, difluoro(oxalato)borate anions (BF₂(C₂O₄)⁻⁾, PF₄(C₂O₄)⁻, and PF₂(C₂O₄)₂⁻, etc, and it is desirable to use at least difluoro(oxalato)borate anions.

Examples of the non-aqueous solvent include an ester, an ether, a nitrile, an amide, and halogen substituted derivatives of these. The non-aqueous electrolyte may include one of these non-aqueous solvents, or two or more of them. Examples of the halogen substituted derivatives include fluorides.

Examples of the ester include carbonic esters and carboxylic acid esters. Examples of cyclic carbonic esters include ethylene carbonate, propylene carbonate, and fluoroethylene carbonate (FEC), etc. Examples of chain carbonic esters include dimethyl carbonate (DMC), ethyl methyl carbonate (EMC), and diethyl carbonate, etc. Examples of cyclic carboxylic acid esters include γ-butyrolactone and γ-valerolactone, etc. Examples of chain carboxylic acid esters include ethyl acetate, methyl propionate, and methyl fluoropropionate, etc.

Examples of the ether include cyclic ethers and chain ethers. Examples of the cyclic ethers include 1,3-dioxolane, 4-methyl-1,3-dioxolane, tetrahydrofuran, and 2-methyltetrahydrofuran, etc. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether, etc.

The lithium salt concentration in the non-aqueous electrolyte is 0.5 mol/L or more and 3.5 mol/L or less, for example. The anion concentration in the non-aqueous electrolyte may be set to 0.5 mol/L or more and 3.5 mol/L or less. The oxalate complex anion concentration in the non-aqueous electrolyte may be set to 0.05 mol/L or more and 1 mol/L or less.

### (Lithium Ion Secondary Battery)

The secondary battery according to the present disclosure may be a lithium ion secondary battery. The following describes the lithium ion secondary battery in detail.

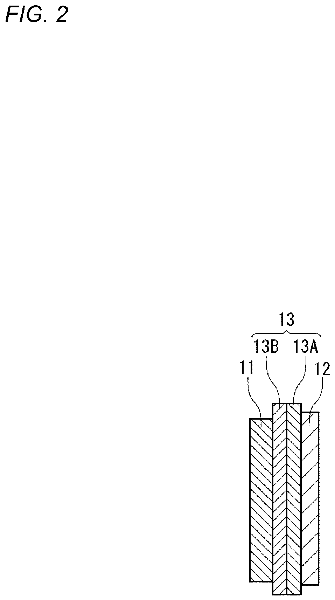

A positive electrode and a non-aqueous electrolyte that can be used in a lithium secondary battery can be used as the positive electrode and the non-aqueous electrolyte in the lithium ion secondary battery. The above-described examples can be used as the positive electrode and the non-aqueous electrolyte. A separator that can be used in a lithium secondary battery can be used as the separator. The separator may be constituted by a first substrate 13A and a second substrate 13B shown in FIG. 2.

The negative electrode of the lithium ion secondary battery includes a negative electrode active material layer (negative electrode mixture layer) that contains a negative electrode active material that absorbs and releases lithium ions, for example. The negative electrode may also include a resin film including a metal base layer and supporting the negative electrode active material layer. That is to say, the negative electrode may include a resin film supporting the negative electrode active material layer and a metal base layer covering a surface of the resin film, and the metal base layer may be provided between the negative electrode active material layer and the resin film.

The negative electrode mixture layer contains the negative electrode active material and components other than the negative electrode active material as necessary. The components other than the negative electrode active material may include a binder, a thickener, an electrically conductive material, etc. Known materials may be used as the negative electrode active material, the binder, the electrically conductive material, the thickener, etc. The negative electrode is obtained by applying a negative electrode mixture slurry to a surface of the resin film including the metal base layer, drying the applied film, and then rolling the dry applied film to form the negative electrode mixture layer. The negative electrode mixture layer may be formed on one surface or both surfaces of the resin film including the metal base layer.

Examples of the negative electrode active material include a carbonaceous material and a Si-containing material, etc. The Si-containing material may be composite particles including an ion conductive phase and a silicon phase dispersed in the ion conductive phase. The ion conductive phase includes at least one selected from the group consisting of a silicate phase, a silicon oxide phase, and a carbon phase. The silicate phase may be a lithium silicate phase, and the composition of lithium silicate can be expressed by the following formula: Li_{2z}SiO_{2+z} (0<z<2). From the standpoint of stability, ease of production, and lithium ion conductivity, for example, it is preferable that z satisfies a relationship: 0<z<1, and it is more preferable that z satisfies z=1/2. Lithium silicate that satisfies z=1/2 can be expressed as Li₂Si₂O₅. The main component (e.g., 95 to 100% by mass) of the silicon oxide phase may be silicon dioxide. When the ion conductive phase is a silicon oxide phase, the silicon oxide is expressed by the following formula: SiOₓ (0.5≤x<1.6), for example. The carbon phase may be constituted by amorphous carbon. The amorphous carbon may be hard carbon, soft carbon, or other carbon. The amorphous carbon is generally a carbon material of which an average interplanar distance d002 of (002) plane measured through an X-ray diffraction method is more than 0.34 nm.

Examples of the carbonaceous material include graphite, easily-graphitizable carbon (soft carbon), and hardly-graphitizable carbon (hard carbon). The negative electrode may contain one negative electrode active material or two or more negative electrode active materials in combination. The negative electrode active material may be a mixture of a carbonaceous material and a Si-containing material.

Examples of the electrically conductive material include a carbon material. Examples of the carbon material include carbon black, acetylene black, Ketjen Black, carbon nanotubes, and graphite, etc.

Examples of the binder include a fluorocarbon resin, polyacrylonitrile, a polyimide resin, an acrylic resin, a polyolefin resin, and a rubbery polymer, etc. Examples of the fluorocarbon resin include polytetrafluoroethylene and polyvinylidene fluoride, etc. Examples of the thickener include anionic cellulose ether such as carboxymethyl cellulose (CMC).

When the positive electrode is an electrode including a resin film, a negative electrode current collector may be used instead of the resin film including the metal base layer in the negative electrode. Examples of the material of the negative electrode current collector include stainless steel, nickel, a nickel alloy, copper, a copper alloy, and oxygen-free copper, etc.

The following further describes an embodiment of a secondary battery according to the present disclosure with reference to the drawings. In the drawings, the shape and features of each component do not necessarily reflect actual dimensions, and are not necessarily shown in the same scale. The same components shown in the drawings are denoted by the same reference signs.

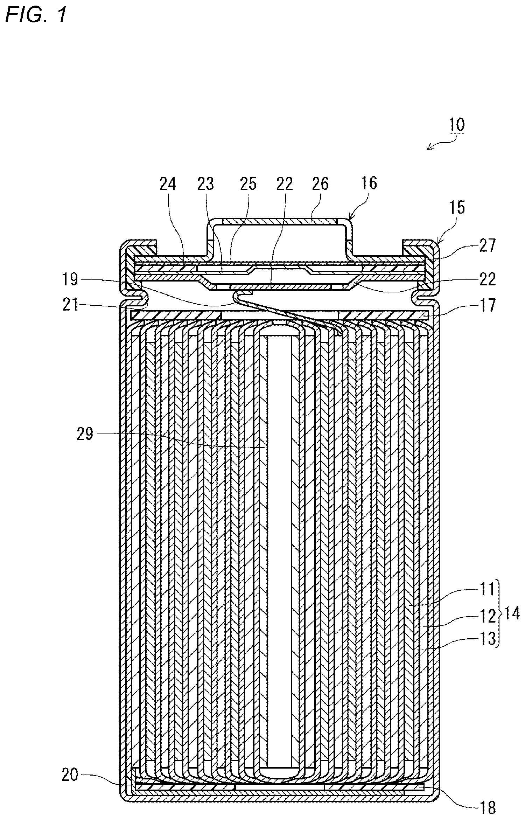

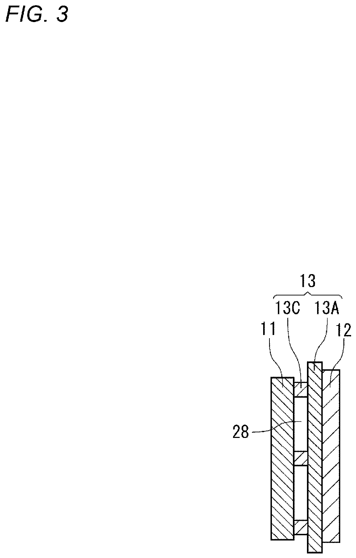

FIG. 1 is a schematic longitudinal cross-sectional view of a secondary battery according to an embodiment of the present disclosure taken along a plane parallel to a winding axis. FIG. 2 is a schematic diagram showing an example of a configuration of an electrode group. FIG. 3 is a schematic diagram showing another example of the configuration of the electrode group.

A lithium secondary battery 10 includes a cylindrical battery case, a wound electrode group 14 housed in the battery case, and a non-aqueous electrolyte (not shown). The battery case includes a cylindrical battery can 15 having a bottom and a sealing body 16 that seals an opening of the battery can 15. The battery can 15 includes an annular step portion 21 formed by partially pressing the sidewall of the battery can from the outside in the vicinity of the opening. The sealing body 16 is supported on the opening-side surface of the step portion 21. A gasket 27 is placed between the battery can 15 and the sealing body 16 to secure the hermeticity of the battery can. Inside the battery can 15, electrically insulating plates 17 and 18 are placed respectively at two ends of the electrode group 14 in the winding axis direction.

The sealing body 16 includes a filter 22, a lower valve body 23, an electrically insulating member 24, an upper valve body 25, and a cap 26. The cap 26 is disposed outside the battery can 15, and the filter 22 is disposed inside the battery can 15. Center portions of the lower valve body 23 and the upper valve body 25 are connected to each other, and the insulating member 24 is disposed between peripheral portions of the lower valve body 23 and the upper valve body 25. Peripheral portions of the filter 22 and the lower valve body 23 are connected to each other. Peripheral portions of the upper valve body 25 and the cap 26 are connected to each other. The lower valve body 23 is provided with an air vent hole. When the internal pressure of the battery can rises due to abnormal heat generation or other events, the upper valve body 25 bulges toward the cap 26 away from the lower valve body 23. Consequently, electrical connection between the lower valve body 23 and the upper valve body 25 is cut off. When the internal pressure further rises, the upper valve body 25 ruptures to let gas escape through an opening provided in the cap 26.

The electrode group 14 includes a positive electrode 11, a negative electrode 12, and a separator 13. The positive electrode 11, the negative electrode 12, and the separator 13 disposed therebetween all have elongated sheet shapes (or band-like shapes) and are wound together such that the width direction of each of them is parallel to the winding axis. A core member 29 is disposed in a hollow part of the electrode group 14. Although the illustrated core member 29 has a cylindrical shape, the shape of the core member 29 is not limited to this shape, and may also be a round columnar shape, for example.

The positive electrode 11 includes a resin film including a metal base layer and positive electrode mixture layers supported on both surfaces of the resin film, for example. The positive electrode 11 is electrically connected, via a positive electrode lead 19, to the cap 26 that serves as a positive electrode terminal. One end of the positive electrode lead 19 is connected to a predetermined position on the positive electrode 11 where the metal base layer is exposed, for example. The other end of the positive electrode lead 19 led out from the positive electrode 11 is passed through a through hole provided in the insulating plate 17 and welded to an inner surface of the filter 22.

The negative electrode 12 includes a resin film (or a resin film including a metal base layer) and lithium metal layers supported on both surfaces of the resin film. In the present embodiment, both the positive electrode and the negative electrode are electrodes including resin films, but a configuration is also possible in which at least one of the positive electrode and the negative electrode is an electrode including a resin film. The negative electrode 12 is electrically connected, via a negative electrode lead 20, to the battery can 15 that serves as a negative electrode terminal. One end of the negative electrode lead 20 is connected to a predetermined position on a lithium metal layer of the negative electrode 12 (or a predetermined position where the metal base layer is exposed), for example, and the other end of the negative electrode lead 20 is welded to an inner bottom surface of the battery can 15.

As shown in FIG. 2, the separator 13 includes a first substrate 13A and a second substrate 13B. Materials of the first substrate and the second substrate may be the same as each other or different from each other. Thicknesses of the first substrate and the second substrate may be the same as each other or different from each other. When the substrates are microporous sheets, the microporous sheets melt and pores are closed when the temperature of the battery rises due to a short circuit or the like, and thus a current can be shut off. When the substrates are nonwoven sheets, voids (pores) in the substrates can be made relatively large.

Alternatively, the separator 13 included in the electrode group 14 may include the first substrate 13A and line-shaped protrusions 13C as shown in FIG. 3. In this case, the first substrate 13A may be a microporous sheet, and the protrusions 13C may be a heat-resistant layer. The protrusions 13C serve as a spacer, and a space 28 is formed between the positive electrode 11 and the negative electrode 12 by the protrusions 13C.

The protrusions 13C have a rectangular cross-sectional shape, but the cross-sectional shape of the protrusions 13C is not limited to this shape, and may also be a trapezoidal shape, for example. The protrusions 13C are provided between the positive electrode 11 and the first substrate 13A, but may also be provided between the first substrate 13A and the negative electrode 12.

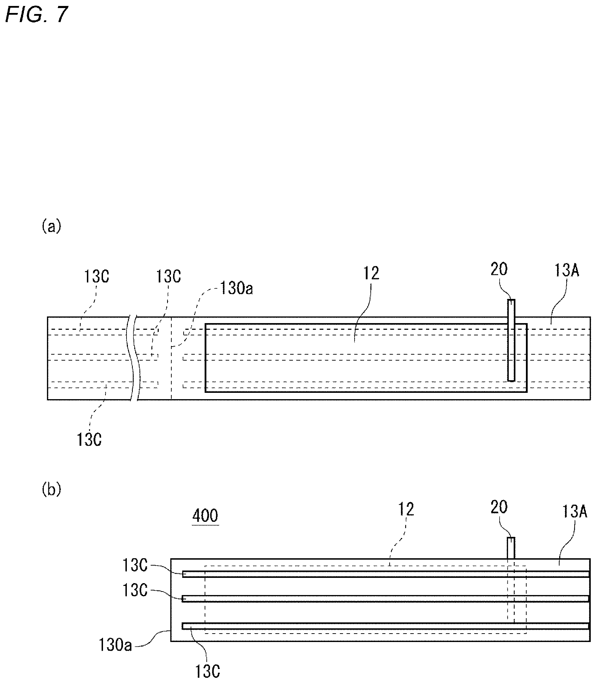

As shown in FIG. 7, when the first substrate 13A including the line-shaped protrusions 13C is viewed in a normal direction with respect to a main surface of the first substrate 13 A before the electrode group is formed, the plurality of protrusions 13C are provided at equal intervals in the width direction of the first substrate 13A. Also, the plurality of protrusions 13C extend in parallel to the length direction of the first substrate 13A.

In the present embodiment, three line-shaped protrusions 13C are provided in parallel to each other along the length direction of the first substrate 13A, but the number of line-shaped protrusions is not limited to this example. Also, the arrangement of the line-shaped protrusions is not limited to this example. When the first substrate including protrusions is viewed in the normal direction with respect to a main surface of the first substrate before the electrode group is formed, the protrusions may be provided so as to extend along straight lines or curved lines, or formed in a network pattern or a dot pattern.

The space 28 is formed between the positive electrode 11 and the negative electrode 12 by the separator 13 including the protrusions 13C. In the discharged state, the amount of lithium metal deposited on the negative electrode is small (the thickness of the lithium metal layer is small), and the space 28 is secured. On the other hand, in the charged state, the amount of lithium metal deposited on the negative electrode is large (the thickness of the lithium metal layer is large), and the deposited lithium metal is stored in the space 28 with a pressing force applied from the first substrate 13A to the lithium metal.

Since the lithium metal is stored in the space 28 between the positive electrode 11 and the separator 13, apparent changes in the volume of the electrode group associated with the deposition of lithium metal during charge-discharge cycles are reduced. Accordingly, stress applied to the negative electrode is also suppressed. Moreover, since a pressure is applied from the first substrate 13A to lithium metal stored between the negative electrode 12 and the first substrate 13A, the lithium metal is deposited in a controlled manner and is unlikely to be isolated, and a reduction in a charge-discharge efficiency can be suppressed.

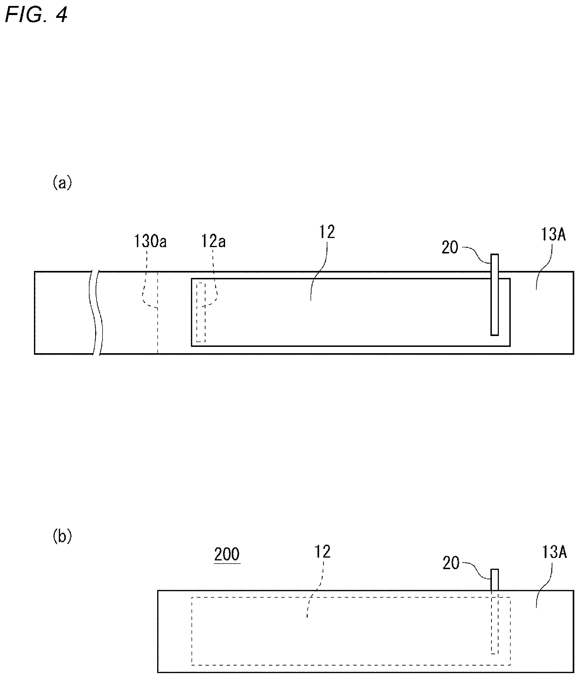

The following describes an example of a method for manufacturing an electrode group including a core member, which has the configuration shown in FIG. 2 and includes the separator 13 constituted by the first substrate 13A and the second substrate 13B with reference to FIGS. 4 to 6.

The band-shaped first substrate 13A is folded in half along the width direction in a center portion in the longitudinal direction to make a fold 130a. The negative electrode 12 provided with the negative electrode lead 19 is prepared and is placed at a predetermined position on the first substrate 13A (FIG. 4(a)). At this time, an end portion (a portion that does not face the positive electrode) of the negative electrode 12 is fixed to the first substrate 13A with a double-sided tape 12a or the like, for example. The first substrate 13A is folded in half to obtain a negative electrode composite body 200 in which the first substrate 13A is disposed on both surfaces of the negative electrode 12 (FIG. 4(b)).

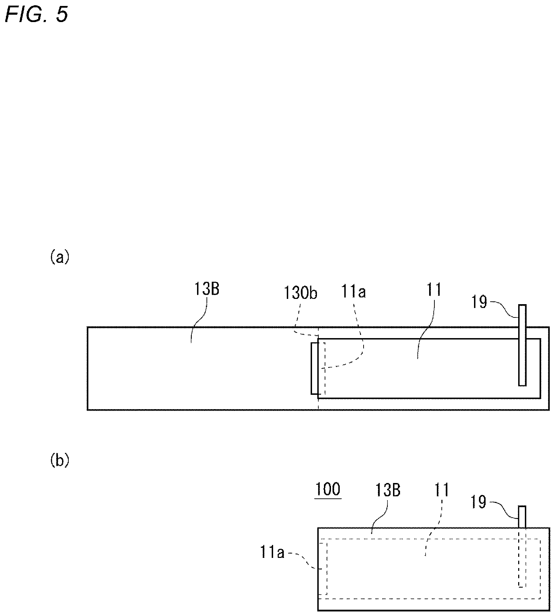

The band-shaped second substrate 13B is folded in half along the width direction in a center portion in the longitudinal direction to make a fold 130b. The positive electrode 13 provided with the positive electrode lead 20 is prepared and the positive electrode 11 is placed at a predetermined position on the second substrate 13B (FIG. 5(a)). The second substrate 13B is folded in half to obtain a positive electrode composite body 100 in which the second substrate 13B is disposed on both surfaces of the positive electrode 11 (FIG. 5(b)). At this time, a double-sided tape 11a is attached along the fold 130b in the second substrate 130b, and an end portion of the positive electrode 11 is fixed to the second substrate 13B with the double-sided tape 11a, for example.

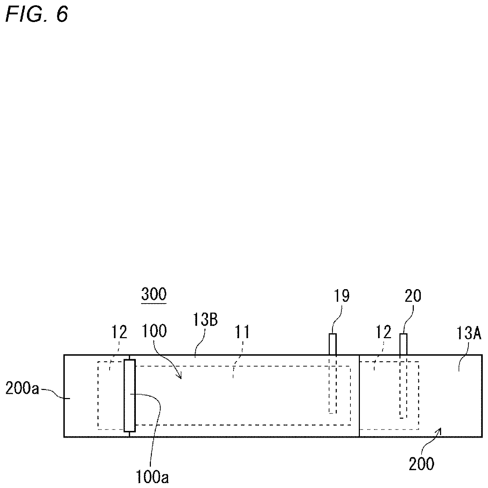

The positive electrode composite body 100 is placed at a predetermined position on the negative electrode composite body 200, and an end portion of the positive electrode composite body 100 is fixed with an adhesive tape 100a or the like to obtain a positive and negative electrode stack 300 (FIG. 6). The core member is placed in an end portion 200a (on a surface opposite to the positive electrode composite body 100) of the positive and negative electrode stack 300 (negative electrode composite body 200) in the length direction and is fixed with a tape or the like, and then the positive and negative electrode composite body 300 is wound around the core member such that the negative electrode composite body 200 is located on the inner side (the positive electrode composite body 100 is located on the outer side).

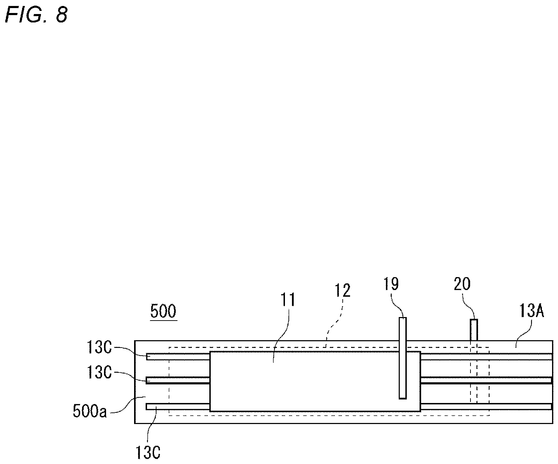

The following describes an example of a method for manufacturing an electrode group including a core member, which has the configuration shown in FIG. 3 and includes the separator 13 constituted by the first substrate 13A and the line-shaped protrusions 13C with reference to FIGS. 7 and 8.

The protrusions 13C are provided on a surface of the first substrate 13A (FIG. 7(a)). At this time, the protrusions 13C are not provided in a portion in which a fold 130a, which will be described later, will be made (a portion to which the core member will be attached). The first substrate 13Ais folded in half to make the fold 130a. The negative electrode 12 is placed at a predetermined position on another surface of the first substrate 13A (FIG. 7(a)). The first substrate 13A is folded in half to obtain a negative electrode composite body 400 in which the first substrate 13Aincluding the protrusions 13C is disposed on both surfaces of the negative electrode 12 (FIG. 4(b)).

The positive electrode 11 is placed at a predetermined position on the negative electrode composite body 400 and is fixed with an adhesive tape or the like to obtain a positive and negative electrode stack 500 (FIG. 8). The core member is placed in an end portion 500a (on a surface opposite to the positive electrode 11) of the positive and negative electrode stack 500 (negative electrode composite body 400) in the length direction and is fixed with a tape or the like, and then the positive and negative electrode stack 500 is wound around the core member such that the negative electrode composite body 400 is located on the inner side (the positive electrode 11 is located on the outer side).

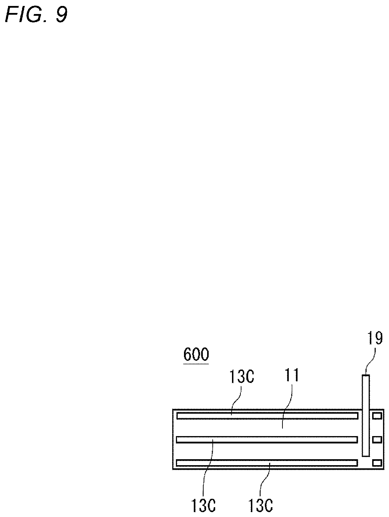

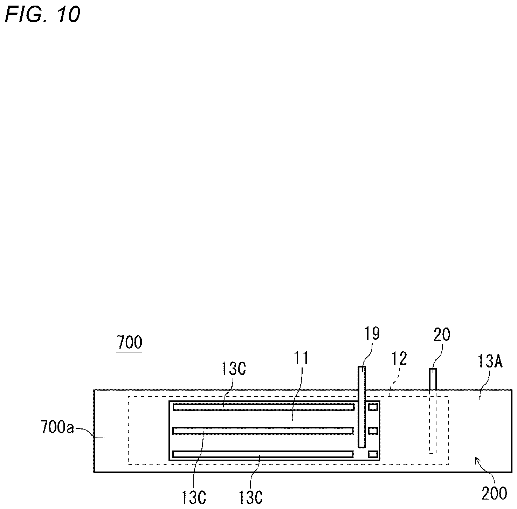

The following describes another example of the method for manufacturing an electrode group including a core member, which has the configuration shown in FIG. 3 and includes the separator 13 constituted by the first substrate 13A and the line-shaped protrusions 13C with reference to FIGS. 9 and 10.

The protrusions 13C are provided on both surfaces of the positive electrode 11 to obtain a positive electrode composite body 600 (FIG. 9). At this time, the protrusions 13C are not provided in a portion to which the positive electrode lead 19 is attached. The negative electrode composite body 200 shown in FIG. 4(b) is prepared, and the positive electrode composite body 600 is placed at a predetermined position on the negative electrode composite body 200 and is fixed with a tape or the like to obtain a positive and negative electrode stack 700 (FIG. 10). The core member is placed in an end portion 700a (on a surface opposite to the positive electrode composite body 600) of the positive and negative electrode stack 700 (negative electrode composite body 200) in the length direction and is fixed with a tape or the like, and then the positive and negative electrode composite body 700 is wound around the core member such that the negative electrode composite body 200 is located on the inner side (the positive electrode composite body 600 is located on the outer side).

In the illustrated examples, a cylindrical lithium secondary battery is described as an example of the secondary battery, but the secondary battery is not limited to this example. The shape and the like of the secondary battery are not limited to those in this example, and the secondary battery may have a rectangular shape or a shape appropriately selected from various shapes in accordance with the application or the like. Also, known configurations other than those described above can be applied without particular limitation.

### [Examples]

The following describes the secondary battery according to the present disclosure in more detail based on Examples and Comparative Examples. However, the present disclosure is not limited to the following Examples.

### <<Secondary Batteries E1 and E3 to E12>>

### (Preparation of resin film or resin film including metal base layer for negative electrode)

A polyethylene terephthalate (PET) film (thickness: 20 µm) was prepared as a resin film. A metal base layer (thickness: 0.2 µm) made of copper was formed on both surfaces of the resin film through a vacuum vapor deposition method as necessary to obtain a resin film including the metal base layer.

### (Production of negative electrode)

A lithium metal foil (thickness: 30 µm) was pressure-bonded to each surface of the resin film or the resin film including the metal base layer in a dry atmosphere in which the dew point was -30°C or lower to provide a lithium metal layer on each surface of the resin film or the resin film including the metal base layer. Thus, a negative electrode 12 was produced and a negative electrode lead 20 made of Ni was attached to a predetermined position on the negative electrode 12. Note that the lithium metal layer had a thickness of 55 µm when the battery was charged and a thickness of 30 µm when the battery was discharged. That is to say, the thickness X of lithium metal deposited on the negative electrode when the battery was charged was 25 µm.

### (Preparation of first substrate)

The band-shaped first substrate 13A shown in FIG. 4(a) was prepared. A sheet-shaped microporous polyethylene film was used as the first substrate 13A. The first substrate 13A had a thickness Y1 of 15 µm or 30 µm.

### (Production of negative electrode composite body)

The negative electrode 12 was placed at a predetermined position on the first substrate 13A(FIG. 4(a)). At this time, an end portion (a portion that did not face the positive electrode) of the negative electrode 12 was fixed to the first substrate 13A with a double-sided tape 12a. Next, the first substrate 13A was folded in half along the fold 130a to obtain a negative electrode composite body 200 in which the first substrate 13A was disposed on both surfaces of the negative electrode 12 (FIG. 4(b)).

### (Preparation of Al foil or resin film including metal base layer for positive electrode)

An Al foil (thickness: 20 µm) or a resin film including a metal base layer was prepared. The resin film including a metal base layer was obtained by forming a metal base layer (thickness: 1.5 µm) made of aluminum on each surface of a polyethylene terephthalate (PET) film (thickness: 20 µm) through a vacuum vapor deposition method.

### (Preparation of positive electrode mixture slurry)

2.5 parts by mass of acetylene black and 2.5 parts by mass of polyvinylidene fluoride were added to 95 parts by mass of a positive electrode active material, and an appropriate amount of N-methyl-2-pyrrolidone was further added to the mixture and the mixture was stirred to prepare a positive electrode mixture slurry. A lithium-containing transition metal oxide containing Li, Ni, Co, and Al (a molar ratio of Li to the total amount of Ni, Co, and Al was 1.0) and having a rock salt-type layered structure was used as the positive electrode active material.

### (Production of positive electrode)

The positive electrode mixture slurry was applied to both surfaces of the resin film including the metal base layer or the Al foil and then dried, and the applied films were rolled to obtain a stack including a positive electrode mixture layer (with a thickness of 65 µm on each surface) formed on each surface of the Al foil or the resin film including the metal base layer. The stack was cut to a predetermined electrode size to obtain a band-shaped positive electrode 11. A positive electrode lead 19 made of Al was attached to a predetermined position on the positive electrode 11. A packing amount of the positive electrode mixture layer (the positive electrode active material) was adjusted as appropriate such that the thickness X of lithium metal deposited on the negative electrode during charging was 25 µm.

### (Preparation of second substrate)

The band-shaped second substrate 13B shown in FIG. 5(a) was prepared for E6 to E12. A sheet-shaped microporous polyethylene film or a sheet-shaped nonwoven fabric made of polyester was used as the second substrate 13B. The second substrate 13B had a thickness Y2 of 30 µm.

### (Production of positive electrode composite body)

The positive electrode 11 was placed at a predetermined position on the second substrate 13B (FIG. 5(a)). At this time, an end portion of the positive electrode 11 was fixed to the second substrate 13B with a double-sided tape 11a. Next, the second substrate 13B was folded in half along the fold 130b to obtain a positive electrode composite body 100 in which the second substrate 13B was disposed on both surfaces of the positive electrode 11 (FIG. 5(b)).

### (Preparation of core member)

A core member made of SUS304 or polypropylene (PP) was prepared. The core member had a round columnar shape or a cylindrical shape. The core member had an outer diameter D1 of 1.8 mm or 3 mm.

When the battery was initially discharged, an outer circumferential surface of an electrode group came into contact with an inner circumferential surface of a battery can, and an outer diameter D2 of the electrode group was equivalent to an inner diameter (9 mm) of the battery can. A ratio: D1/D2 of the outer diameter D1 of the core member to the outer diameter D2 of the electrode group when the battery was discharged was 1/3 or 1/5.

### (Production of electrode group including core member)

In E6 to E12, the positive electrode composite body 100 was placed at a predetermined position on the negative electrode composite body 200, and an end portion of the positive electrode composite body 100 was fixed with an adhesive tape 100a or the like to obtain a positive and negative electrode stack 300 as shown in FIG. 6.

The core member 29 was placed on an end portion 200a (a surface opposite to the positive electrode composite body 100) of the positive and negative electrode stack 300 (negative electrode composite body 200) and fixed with a tape or the like. The positive and negative electrode stack 300 was wound around the core member 29 such that the negative electrode composite body 200 was located on the inner side (the positive electrode composite body 100 was located on the outer side). Thus, an electrode group 14 including the core member 29 was obtained. The electrode group 14 included a separator 13 constituted by the first substrate 13A and the second substrate 13B. The positive electrode lead 19 and the negative electrode lead 20 were exposed from an edge surface of the columnar wound electrode group.

In E1 and E3 to E5, the positive electrode 11 was placed at a predetermined position on the negative electrode composite body 200 to obtain a positive and negative electrode stack, and an electrode group 14 including the core member 29 was obtained in the same manner as that described above. The electrode group 14 included a separator 13 constituted by the first substrate 13A.

### (Preparation of non-aqueous electrolyte)

LiPF₆ and LiBF₂(C₂O₄) were dissolved in a mixed solvent obtained by mixing 1,2-dimethoxyethane and 1, 1,2,2-tetrafluoroethyl-2,2,2-trifluoroethyl ether to prepare a non-aqueous electrolyte. The LiPF₆ concentration in the non-aqueous electrolyte was 1 mol/L. The LiBF₂(C₂O₄) concentration in the non-aqueous electrolyte was 0.1 mol/L.

### (Assembly of battery)

The electrode group was inserted into a cylindrical battery can having a bottom, the non-aqueous electrolyte was poured into the battery can, and the opening of the battery can was sealed with a sealing body. At this time, the positive electrode lead was connected to the sealing body, and the negative electrode lead was connected to the battery can. A gasket was disposed between the sealing body and the battery can. Thus, a lithium secondary battery was completed.

### <<Secondary Batteries E2, E13, and E14>>

### (Preparation of resin film including metal base layer for negative electrode)

A polyethylene terephthalate (PET) film (thickness: 20 µm) was prepared as a resin film. A metal base layer made of copper (thickness: 0.2 µm) was formed on each surface of the resin film through a vacuum vapor deposition method. Thus, a resin film including the metal base layer was obtained.

### (Preparation of negative electrode mixture slurry)

1 part by mass of carboxymethyl cellulose sodium salt (CMC-Na) and 1.5 parts by mass of styrene-butadiene rubber (SBR) were added to 97.5 parts by mass of a negative electrode active material, and an appropriate amount of water was further added to the mixture and the mixture was stirred to prepare a negative electrode mixture slurry.

In the batteries E2 and E13, a mixture obtained by mixing 50 parts by mass of a silicon-containing material and 50 parts by mass of graphite was used as the negative electrode active material. In the electrode E14, the silicon-containing material was used as the negative electrode active material. Composite particles (SiOₓ particles) in which a silicon phase was dispersed in a silicon oxide phase were used as the silicon-containing material. The composite particles included a conductive layer containing a conductive carbon material on their surfaces.

Note that Gr and Si in Tables 2 and 3 represent graphite and the silicon-containing material, respectively.

### (Production of negative electrode)

The negative electrode mixture slurry was applied to both surfaces of the resin film including the metal base layer and then dried, and the applied films were rolled to obtain a stack including a negative electrode mixture layer (with a thickness of 50 µm on each surface) formed on each surface of the resin film including the metal base layer. The stack was cut to a predetermined electrode size to obtain a band-shaped negative electrode 12. A negative electrode lead 20 made of Ni was attached to a predetermined position on the negative electrode 12.

### (Preparation of non-aqueous electrolyte)

LiPF₆ was dissolved at a concentration of 1.0 mol/L in a mixed solvent containing ethylene carbonate (EC) and diethyl carbonate (DEC) at a volume ratio of 3:7 to prepare a non-aqueous electrolyte.

The battery E2 was produced in the same manner as the battery E1 except that the negative electrode and the non-aqueous electrolyte described above were used. The batteries E13 and E14 were produced in the same manner as the battery E11 except that the negative electrode and the non-aqueous electrolyte described above were used. Note that the batteries E2, E13, and E14 are lithium ion secondary batteries.

### <<Secondary Battery E15>>

### (Preparation of spacer ink)

90 parts by mass of inorganic particles, 10 parts by mass of polyvinylidene fluoride (PVdF), which is a resin material, and N-methyl-2-pyrrolidone, which is a dispersion medium, were mixed to prepare a spacer ink. Alumina particles (including alumina particles having an average particle diameter of 1 µm and alumina particles having an average particle diameter of 0.1 µm at a mass ratio of 10/1) were used as the inorganic particles.

### (Production of first substrate including spacer: formation of line-shaped protrusions on first substrate)

The same first substrate as that used in Example 6 was prepared. The spacer ink was applied to a surface (positive-electrode-side surface) of the first substrate with use of a dispenser and dried with hot air to form line-shaped protrusions (spacer). Specifically, as shown in FIG. 7(a), a total of three mutually parallel line-shaped protrusions 13C (width: 1 mm, height: 30 µm) were formed on a surface of the first substrate 13A along the length direction thereof in two end portions and a center portion in the width direction of the first substrate 13A. At this time, the spacer ink was intermittently applied so as not to form the protrusions 13C in a portion in which a fold 130a was to be made (the core member 29 was to be attached).

### (Production of electrode group including core member)

The negative electrode 12 was placed at a predetermined position on the other surface (on which the protrusions 13C were not formed) of the first substrate 13A (FIG. 7(a)). The first substrate 13A was folded in half to dispose the first substrate 13Aincluding the protrusions 13C on both surfaces of the negative electrode 12, and thus a negative electrode composite body 400 was obtained (FIG. 7(b)). The positive electrode 11 was placed at a predetermined position on the negative electrode composite body 400 and fixed with a tape or the like to obtain a positive and negative electrode stack 500 (FIG. 8). The core member 29 was placed on an end portion 500a (on a surface opposite to the positive electrode 11) of the positive and negative electrode stack 500 (negative electrode composite body 400) in the length direction and fixed with a tape or the like. The positive and negative electrode stack 500 was wound around the core member 29 such that the negative electrode composite body 400 was located on the inner side (the positive electrode 11 was located on the outer side). Thus, an electrode group 14 including the core member 29 was obtained. The electrode group 14 included a separator 13 constituted by the first substrate 13A and the line-shaped protrusions 13C.

The battery 15 was obtained in the same manner as the battery E11 except that the electrode group including the core member, which was obtained as described above, was used.

### <<Secondary Battery E16>>

### (Production of positive electrode including spacer: formation of line-shaped protrusions on positive electrode)

The spacer ink described above was applied to both surfaces of the positive electrode with use of a dispenser and dried with hot air to form line-shaped protrusions (spacer). Specifically, as shown in FIG. 9, a total of three mutually parallel line-shaped protrusions 13C (width: 1 mm, height: 30 µm) were formed on both surfaces of the positive electrode 11 along the length direction thereof in two end portions and a center portion in the width direction of the positive electrode 11. At this time, the spacer ink was intermittently applied so as not to form the protrusions 13C in a portion to which the positive electrode lead 19 was attached. Thus, the protrusions 13C were provided on both surfaces of the positive electrode 11 to obtain a positive electrode composite body 600 (FIG. 9).

### (Production of electrode group including core member)

The negative electrode composite body 200 shown in FIG. 4(a) was prepared, and the positive electrode composite body 600 was placed at a predetermined position on the negative electrode composite body 200 and fixed with a tape or the like to obtain a positive and negative electrode stack 700 (FIG. 10). The core member 29 was placed on an end portion 700a (on a surface opposite to the positive electrode composite body 600) of the positive and negative electrode stack 700 (negative electrode composite body 200) and fixed with a tape or the Ike. The positive and negative electrode stack 700 was wound around the core member 29 such that the negative electrode composite body 200 was located on the inner side (the positive electrode composite body 600 was located on the outer side). Thus, an electrode group 14 including the core member 29 was obtained. The electrode group 14 included a separator 13 constituted by the first substrate 13A and the line-shaped protrusions 13C.

The battery E16 was obtained in the same manner as the battery E11 except that the electrode group including the core member, which was obtained as described above, was used.

### <<Secondary Battery R1>>

A negative electrode was obtained by pressure-bonding a lithium metal foil (thickness: 30 µm) on each surface of an electrodeposited copper foil (thickness: 12 µm). The same positive electrode used in the battery E1 was used as a positive electrode.

A battery R1 was obtained in the same manner as the battery E11 except that the negative electrode and the positive electrode described above were used.

### <<Secondary Battery R2>>

A battery R2 was obtained in the same manner as the battery E11 except that an electrode group including a hollow part was obtained by winding the positive and negative electrode stack around a winding core to form an electrode group and removing the winding core.

### <<Secondary Battery R3>>

A battery R3 was obtained in the same manner as the battery R1 except that an electrode group including a hollow part was obtained by winding the positive and negative electrode stack around a winding core to form an electrode group and removing the winding core.

### [Evaluation]

A charge-discharge cycle test was performed on each of the obtained batteries in an environment at a temperature of 25°C. The batteries were charged and discharged under the following conditions. A pause of 20 minutes was taken between charging and discharging.

### (Charging)

Constant-current charging was performed at 10 mA until the battery voltage reached 4.1 V, and then constant-voltage charging was performed at the voltage of 4.1 V until the current value reached 1 mA.

### (Discharging)

Constant-current discharging was performed at 10 mA until the battery voltage reached 3.0 V

The charging and discharging were repeatedly performed until 100 cycles, and a rate: (C2/C1)×100 of a discharge capacity C2 at the 100th cycle to a discharge capacity C1 at the 1st cycle was determined as a cycle capacity retention rate (%).

Evaluation results are shown in Tables 1 to 3. In the tables, E1 to E16 are Examples, and R1 to R3 are Comparative Examples. The cycle capacity retention rates shown in the tables are relative values (indexes) when the cycle capacity retention rate of the secondary battery R3 is taken to be 100.

**[Table 1]**

| | Negative electrode | | | | Positive electrode | | Separator | | | | Distance Y between electrodes (Y1+Y2) (µm) | Y/X | Core member | | Outer diameter ratio D1/D2 | Cycle capacity retention rate (index) |
|---|---|---|---|---|---|---|---|---|---|---|---|---|---|---|---|---|
| | Active material layer support | Metal base layer | Active material | Thickness X of Li deposited during charging (µm) | Active material layer support | Metal base layer | First substrate (negative electrode side) | | Second substrate (positive electrode side) | | | | Material | Shape | | |
| | | | | | | | Type | Thickness Y1 (µm) | Type | Thickness Y2 (µm) | | | | | | |
| R1 | Electrodeposited copper foil | - | Li metal | 25 | Al foil | - | Microporous film | 30 | Microporous film | 30 | 60 | 2.4 | SUS 304 | Cylindrical | 1/5 | 101.0 |
| R2 | PET film | Cu | Li metal | 25 | PET film | Al | Microporous film | 30 | Microporous film | 30 | 60 | 2.4 | - | - | - | 105.9 |
| R3 | Electrodeposited copper foil | - | Li metal | 25 | Al foil | - | Microporous film | 30 | Microporous film | 30 | 60 | 2.4 | - | - | - | 100.0 |
| E11 | PET film | Cu | Li metal | 25 | PET film | Al | Microporous film | 30 | Microporous film | 30 | 60 | 2.4 | SUS 304 | Cylindrical | 1/5 | 141.2 |

**[Table 2]**

| | Negative electrode | | | | Positive electrode | | Separator | | | | Distance Y between electrodes (Y1+Y2) (µm) | Y/X | Core member | | Outer diameter ratio D1/D2 | Cycle capacity retention rate (index) |
|---|---|---|---|---|---|---|---|---|---|---|---|---|---|---|---|---|
| | Active material layer support | Metal base layer | Active material | Thickness X of Li deposited during charging (µm) | Active material layer support | Metal base layer | First substrate (negative electrode side) | | Second substrate (positive electrode side) | | | | Material | Shape | | |
| | | | | | | | Type | Thickness Y1 (µm) | Type | Thickness Y2 (µm) | | | | | | |
| E1 | PP film | - | Li metal | 25 | Al foil | - | Microporous film | 15 | - | - | 15 | 0.6 | SUS 304 | Round columnar | 1/3 | 117.6 |
| E2 | PP film | Cu | Gr+Si | - | Al foil | - | Microporous film | 15 | - | - | 15 | 0.6 | SUS 304 | Round columnar | 1/3 | 118.8 |
| E3 | PP film | Cu | Li metal | 25 | Al foil | - | Microporous film | 15 | - | - | 15 | 0.6 | SUS 304 | Round columnar | 1/3 | 120.0 |
| E4 | PP film | Cu | Li metal | 25 | PP film | Al | Microporous film | 15 | - | - | 15 | 0.6 | SUS 304 | Round columnar | 1/3 | 123.5 |
| E5 | PET film | Cu | Li metal | 25 | PET film | Al | Microporous film | 45 | - | - | 45 | 1.8 | SUS 304 | Round columnar | 1/3 | 129.4 |

**[Table 3]**

| | Negative electrode | | | | Positive electrode | | Separator | | | | Distance Y between electrodes (Y1+Y2) (µm) | Y/X | Core member | | Outer diameter ratio D1/D2 | Cycle capacity retention rate (index) |
|---|---|---|---|---|---|---|---|---|---|---|---|---|---|---|---|---|
| | Active material layer support | Metal base layer | Active material | Thickness X of Li deposited during charging (µm) | Active material layer support | Metal base layer | First substrate (negative electrode side) | | Second substrate (positive electrode side) | | | | Material | Shape | | |
| | | | | | | | Type | Thickness Y1 (µm) | Type | Thickness Y2 (µm) | | | | | | |
| E6 | PET film | Cu | Li metal | 25 | PET film | Al | Microporous film | 15 | Microporous film | 30 | 45 | 1.8 | SUS 304 | Round columnar | 1/3 | 130.6 |
| E7 | PET film | Cu | Li metal | 25 | PET film | Al | Microporous film | 30 | Microporous film | 30 | 60 | 2.4 | SUS 304 | Round columnar | 1/3 | 136.5 |
| E8 | PET film | Cu | Li metal | 25 | PET film | Al | Microporous film | 30 | Nonwoven fabric | 30 | 60 | 2.4 | SUS 304 | Cylindrical | 1/3 | 135.3 |
| E9 | PET film | Cu | Li metal | 25 | PET film | Al | Microporous film | 30 | Microporous film | 30 | 60 | 2.4 | PP | Cylindrical | 1/3 | 137.6 |
| E10 | PET film | Cu | Li metal | 25 | PET film | Al | Microporous film | 30 | Microporous film | 30 | 60 | 2.4 | SUS 304 | Cylindrical | 1/3 | 135.3 |
| E11 | PET film | Cu | Li metal | 25 | PET film | Al | Microporous film | 30 | Microporous film | 30 | 60 | 2.4 | SUS 304 | Cylindrical | 1/5 | 141.2 |
| E12 | PET film | | Li metal | 25 | PET film | Al | Microporous film | 30 | Microporous film | 30 | 60 | 2.4 | SUS 304 | Cylindrical | 1/5 | 141.2 |
| E13 | PET film | Cu | Gr+Si | - | PET film | Al | Microporous film | 30 | Microporous film | 30 | 60 | 2.4 | SUS 304 | Cylindrical | 1/5 | 135.3 |
| E14 | PET film | Cu | Si | - | PET film | Al | Microporous film | 30 | Microporous film | 30 | 60 | 2.4 | SUS 304 | Cylindrical | 1/5 | 135.3 |
| E15 | PET film | Cu | Li metal | 25 | PET film | Al | Microporous film | 30 | (Protrusions on first substrate) | 30 | 60 | 2.4 | SUS 304 | Cylindrical | 1/5 | 141.2 |
| E16 | PET film | Cu | Li metal | 25 | PET film | Al | Microporous film | 30 | (Protrusions on positive electrode) | 30 | 60 | 2.4 | SUS 304 | Cylindrical | 1/5 | 141.2 |

The batteries E1 and E16 had higher capacity retention rates than the batteries R1 to R3.

The capacity retention rate of the battery R1 produced using the electrode group including the core member increased by about 1% compared with the capacity retention rate of the battery R3 produced using the electrode group including the hollow part (R3→R1). The core member was disposed in the battery R1, but the capacity retention rate of the battery R1 hardly improved because the electrodeposited copper foil used as a negative electrode current collector became brittle and broke. The capacity retention rate of the battery R2 produced using the positive electrode and the negative electrode including the resin films increased by about 6% compared with the capacity retention rate of the battery R3 produced using the positive electrode including a positive electrode current collector (Al foil) and the negative electrode including a negative electrode current collector (electrodeposited copper foil) (R3→R2).

On the other hand, the capacity retention rate of the battery E11, of which the electrode group including the core member was obtained using the electrodes including the resin films, significantly increased by about 41% compared with the capacity retention rate of the battery R3 (R3→E11). The flexible resin films were used and the core member was disposed in the battery E11, and therefore, a surface pressure was stably applied to the entire electrode group during the charge-discharge cycles, the generation of dendrites of lithium metal was suppressed, and the capacity retention rate significantly increased.

### [Industrial Applicability]

The secondary battery according to the present disclosure is applicable to electronic devices such as cellular phones, smart phones, and tablet terminals, electric vehicles, hybrid vehicles, plug-in hybrids, and home storage batteries.

Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

10: lithium secondary battery, 11: positive electrode; 12: negative electrode, 13: separator, 13A: first substrate, 13B: second substrate, 13C: line-shaped protrusions, 14: electrode group, 15: battery can, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 28: space, 29: core member, 50: electrode, 51: active material layer, 52: resin film, 100, 600: positive electrode composite body, 200, 400: negative electrode composite body, 300, 500, 700: positive and negative electrode stack

## Claims

1. A secondary battery comprising:
a wound electrode group including two electrodes and a separator disposed between the two electrodes;
a core member disposed in a hollow part of the electrode group; and
a non-aqueous electrolyte,
wherein at least one of the two electrodes includes an active material layer and a resin film supporting the active material layer.

2. The secondary battery according to claim 1,
wherein the two electrodes are a positive electrode and a negative electrode,
the negative electrode includes:
a negative electrode active material layer as the active material layer, the negative electrode active material layer containing a negative electrode active material that absorbs and releases lithium ions;
the resin film supporting the negative electrode active material layer; and
a metal base layer covering a surface of the resin film, and
the metal base layer is provided between the negative electrode active material layer and the resin film.

3. The secondary battery according to claim 1,
wherein the two electrodes are a positive electrode and a negative electrode,
lithium metal is deposited on the negative electrode when the battery is charged and the lithium metal dissolves when the battery is discharged, and
the negative electrode includes:
a lithium metal layer as the active material layer; and
the resin film supporting the lithium metal layer.

4. The secondary battery according to claim 3,
wherein the negative electrode includes a metal base layer covering a surface of the resin film, and
the metal base layer is provided between the lithium metal layer and the resin film.

5. The secondary battery according to claim 3 or 4,
wherein a thickness X of lithium metal deposited on the negative electrode when the battery is charged and a distance Y between the positive electrode and the negative electrode when the battery is discharged satisfy a relationship: Y/X>1.5.

6. The secondary battery according to any one of claims 2 to 5,
wherein the positive electrode includes:
a positive electrode active material layer as the active material layer, the positive electrode active material layer containing a positive electrode active material that absorbs and releases lithium ions;
the resin film supporting the positive electrode active material layer; and
a metal base layer covering a surface of the resin film, and
the metal base layer is provided between the positive electrode active material layer and the resin film.

7. The secondary battery according to any one of claims 1 to 6,
wherein the core member is fixed to an end portion of the electrode group from which the electrode group is wound.

8. The secondary battery according to any one of claims 1 to 7,
wherein the resin film contains at least one selected from the group consisting of a polyester resin, an olefin resin, a polyphenylene sulfide resin, an acrylic resin, a polycarbonate resin, a polyether ether ketone resin, a polyether sulfone resin, a polyamide resin, a polyimide resin, a nylon resin, a polyvinylidene chloride resin, an ethylene-vinyl alcohol copolymer, a polyvinyl alcohol resin, a polystyrene resin, a urethane resin, and an epoxy resin.

9. The secondary battery according to claim 8,
wherein the polyester resin includes at least one selected from the group consisting of polyethylene terephthalate, polybutylene terephthalate, and polyethylene naphthalate.

10. The secondary battery according to claim 8 or 9,
wherein the olefin resin includes at least one selected from the group consisting of polyethylene and polypropylene.

11. The secondary battery according to any one of claims 1 to 10,
wherein the separator includes at least one substrate selected from the group consisting of a microporous sheet and a nonwoven sheet.

12. The secondary battery according to claim 11,
wherein the separator includes a plurality of the substrates.

13. The secondary battery according to any one of claims 1 to 10,
wherein the separator includes a microporous sheet and a heat-resistant layer provided on at least one surface of the microporous sheet, and
the heat-resistant layer is provided between the microporous sheet and at least one of the two electrodes in the electrode group.

14. The secondary battery according to any one of claims 3 to 5,
wherein the separator is constituted by a stack including a substrate and a protrusion, and
a space is provided between the substrate and at least one of the two electrodes by the protrusion.

15. The secondary battery according to any one of claims 1 to 14,
wherein the core member is made of a metal material or a resin material.

16. The secondary battery according to any one of claims 1 to 15,
wherein the core member has a cylindrical shape.

17. The secondary battery according to any one of claims 1 to 16,
wherein an outer diameter D1 of the core member and an outer diameter D2 of the electrode group when the battery is discharged satisfy a relationship: D1/D2≤1/4.
